# FASCICULE DE BREVET EUROPEEN

(11) **EP 3 720 636 B1**
(45) Date de publication et mention de la délivrance du brevet: **15.03.2023**
(21) Numéro de dépôt: 18808024.6
(22) Date de dépôt: 30.11.2018
(51) Int. Cl.: B23B 29/034, G01B 3/18, G01D 13/10

(54) **ENSEMBLE ARRANGÉ POUR ÊTRE INTÉGRÉ DANS UN MÉCANISME DE COUPE ET/OU D'ALÉSAGE DE PRÉCISION POUR SON RÉGLAGE MANUEL**
EINHEIT ZUR INTEGRATION IN EINEN PRÄZISIONSSCHNEIDE- UND/ODER -BOHRMECHANISMUS FÜR DESSEN MANUELLE EINSTELLUNG
ASSEMBLY ARRANGED TO BE INTEGRATED INTO A PRECISION CUTTING AND/OR BORING MECHANISM FOR ITS MANUAL ADJUSTMENT

(30) Priorité: 05.12.2017 FR 1761662
(43) Date de publication de la demande: 14.10.2020
(73) Titulaire: SECO Tools Tooling Systems, 67330 Bouxwiller (FR)
(72) Inventeur: JAEGER, Claude, 67700 Monswiller (FR); HOPFNER, Sébastien, 67440 Thal Marmoutier (FR)
(74) Mandataire: Sandvik
(86) Numéro de dépôt international: PCT/EP2018/083223
(87) Numéro de publication internationale: WO 2019/110453

(56) Documents cités:
- CH-A- 370 616
- US-A- 1 024 656
- US-A- 1 158 721
- US-A- 2 337 412
- US-A- 2 537 517
- US-A- 4 396 319

## Description

La présente invention concerne un ensemble arrangé pour être intégré dans un mécanisme de coupe et/ou d'alésage de précision pour son réglage manuel selon le préambule de la revendication 1. La présente invention concerne également un dispositif de coupe ou d'alésage, une cartouche micrométrique et une barre d'alésage. Un tel ensemble, un tel dispositif, une telle cartouche et une telle barre d'alésage sont connus du document US 2 337 412 A.

La présente invention se rapporte au domaine des mécanismes de réglage manuel et plus particulièrement au domaine des mécanismes d'optimisation d'un réglage manuel angulaire.

Actuellement, dans le cadre du réglage d'une pièce montée pivotante qui présente une symétrie sensiblement axiale autour de son axe de rotation, il est courant de positionner une graduation régulière sur une partie de sa surface située en vis-à-vis de la surface d'une partie fixe par rapport à laquelle la pièce est pivotante. Cette graduation régulière permet à un manipulateur d'ajuster la position angulaire de la pièce pivotante par rapport à une référence, généralement matérialisée par une marque présente sur la surface d'une partie fixe par rapport à laquelle la pièce est pivotante.

De façon améliorée, le marquage pris en référence réalisé sur la surface d'une partie fixe est réalisée sous la forme d'une graduation de type vernier. Cet arrangement permet ainsi une optimisation du réglage angulaire manuel de la pièce pivotante par rapport à la structure du bâti fixe. Le réglage s'opère alors d'une façon similaire à celle d'un goniomètre.

Toutefois, pour qu'un tel mécanisme demeure fonctionnel pour un réglage manuel par un utilisateur, il est indispensable que la surface de la pièce pivotante qui porte le marquage d'une graduation régulière soit suffisamment importante pour être lisible par l'utilisateur. En effet, dans le cadre de pièces de diamètre restreint, par exemple des vis de réglage de précision, le marquage de graduation est de taille réduite et la qualité de la lecture affecte la qualité du réglage par l'utilisateur. Dans le cadre d'une graduation régulière qui coopère avec un marquage de type vernier, les avantages du réglage liés au vernier s'en trouvent également affecté puisque la lecture de la graduation régulière est altérée.

La présente invention a pour but de pallier cet inconvénient en proposant un mécanisme aisé à mettre en oeuvre qui facilite le réglage manuel angulaire d'une pièce pivotante par rapport une structure fixe tout en optimisant la lisibilité pour l'utilisateur du marquage qui participe à ce réglage.

L'invention a ainsi pour objet un ensemble arrangé pour être intégré dans un mécanisme de coupe et/ou d'alésage de précision pour son réglage manuel selon la revendication 1 comprenant :
- un support fixe,
- une pièce ayant au moins une face sensiblement circulaire et montée sur le support fixe de sorte que la pièce est montée mobile en rotation autour d'un axe sensiblement centré sur la face circulaire,
tel que l'ensemble comprend également dispositif de réglage de la position de la pièce par rapport au support comprenant au moins :
- une première graduation sur une surface associée au support fixe et positionnée sur au moins une portion de la périphérie de la pièce mobile, la première graduation étant une graduation de mesure,
- une seconde graduation positionnée sur la face circulaire de la pièce mobile, la seconde graduation étant de type vernier.

L'invention porte également sur un dispositif de coupe ou d'alésage selon la revendication 6 tel que le dispositif comprend au moins un ensemble selon l'invention.

L'invention porte aussi sur une cartouche micrométrique selon la revendication 7 telle que la cartouche comprend au moins un ensemble selon l'invention.

L'invention porte sur une barre d'alésage selon la revendication 8 telle que la barre comprend au moins un ensemble selon l'invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

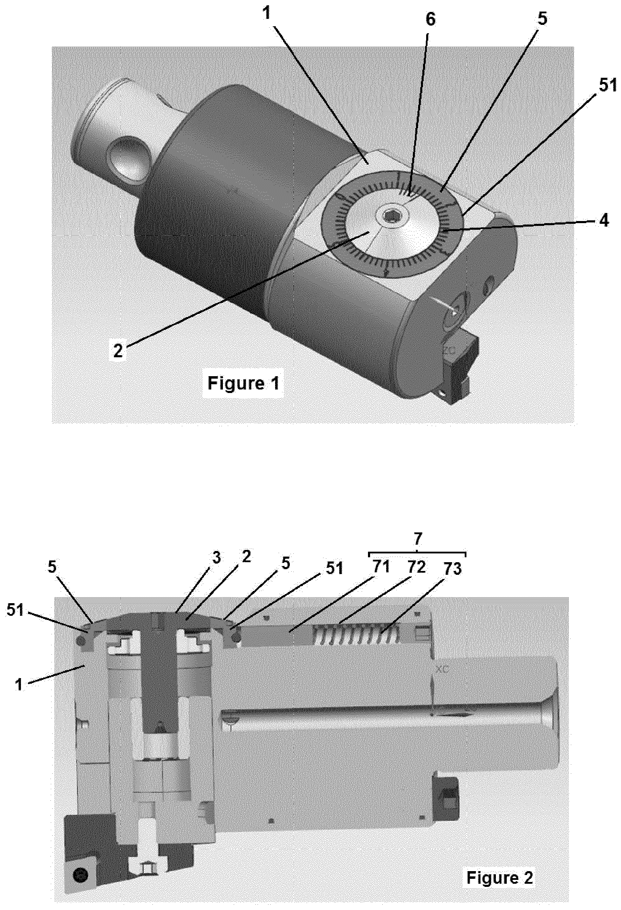

- la figure 1 est une représentation schématique d'un exemple de construction d'un ensemble selon l'invention,
- la figure 2 est une représentation schématique en section d'un exemple de construction d'un ensemble selon l'invention.

Il convient de noter que, dans le présent document, les qualificatifs de « mobile » et « fixe » se rapportent respectivement à la pièce 2 pivotante et au support 1 qui porte la pièce 2 pivotante et par rapport à auquel la pièce 2 pivotante est ajustée angulairement. Les qualificatifs doivent être essentiellement compris comme permettant de définir la seule relation entre la pièce 2 pivotante et le support 1. Aussi, il nécessaire de noter qu'il n'existe aucune limitation dans le cadre de l'invention susceptible d'empêcher que le support 1 soit immobile par rapport à une structure tierce.

L'invention a ainsi pour objet un ensemble arrangé pour être intégré dans un mécanisme de coupe et/ou d'alésage de précision pour son réglage manuel selon la revendication 1 comprenant :
- un support 1 fixe,
- une pièce 2 ayant au moins une face 3 sensiblement circulaire et montée sur le support 1 fixe de sorte que la pièce 2 est montée mobile en rotation autour d'un axe sensiblement centré sur la face 3 circulaire,
caractérisé en ce que l'ensemble comprend également dispositif de réglage de la position de la pièce par rapport au support comprenant au moins :
- une première graduation 4 sur une surface 5 associée au support 1 fixe et positionnée sur au moins une portion de la périphérie de la pièce 2 mobile, la première graduation 4 étant une graduation de mesure,
- une seconde graduation 6 positionnée sur la face 3 circulaire de la pièce 2 mobile, la seconde graduation 6 étant de type vernier.

L'ensemble de l'invention positionne la graduation de mesure, c'est-à-dire la première graduation 4, sur une surface 5 associée au support 1 fixe. L'amplitude de la graduation 4 de mesure est généralement plus importante que celle d'une graduation 6 de type vernier. Aussi, le positionnement de la graduation 4 de mesure sur une surface 5 associée au support 1 fixe permet de profiter de la surface plus importante du support 1 pour porter la graduation 4 de mesure par rapport à la surface disponible au niveau de la face 3 circulaire de la pièce 2 mobile.

Dans ces conditions, la graduation de mesure dispose d'une surface plus importante pour être marquée et donc sa lecture et le repérage de ses mesures recherchées par un utilisateur s'en trouve optimisé pour un réglage angulaire de la pièce 2 mobile.

De façon complémentaire, la graduation de type vernier est reportée sur au moins une portion de la face 3 circulaire de la pièce 2 mobile. L'amplitude d'une graduation 6 de type vernier étant moins importante que celle d'une graduation 4 de mesure, l'importance de la surface nécessaire pour en porter le marquage est alors réduite en conséquence.

Selon une construction préférée, la première graduation 4, correspondant à la graduation 4 de mesure, est positionnée sur une surface 5 associée au support 1 fixe, au niveau d'un bord qui entoure au moins une partie de la face 3 circulaire de la pièce 2 mobile.

Selon une particularité de construction non-limitative de l'invention, ce bord de la surface 5 associée au support 1 fixe qui longe au moins une partie de la face 3 circulaire de la pièce 2 mobile est en contact et/ou à proximité immédiate du bord périphérique de la pièce 2 mobile.

Selon une construction préférée complémentaire, la seconde graduation 6, correspondant à la graduation 6 de type vernier, est positionnée au niveau d'au moins une partie du bord périphérique de la face 3 circulaire de la pièce 2 mobile. Ce positionnement permet ainsi une lecture optimiser de la mesure angulaire avec la première graduation 4, graduation de mesure, marquée en vis-à-vis de la face 3 circulaire de la pièce 2 mobile.

La position angulaire de la pièce 2 mobile par rapport à la surface 5 associée au support 1 fixe est réalisée par lecture de la correspondance entre, d'une part, au moins deux marques prises comme référence sur la seconde graduation 6 de type vernier et, d'autre part, au moins deux marques situées sur la première graduation 4 de mesure.

Selon une construction particulière de l'ensemble qui ne fait pas partie de l'invention, la surface 5 associée au support 1 qui porte la première graduation 4 est fixe avec le support 1 de sorte que la première graduation 4 n'est pas ajustable à la pièce 2 mobile. Selon cette construction, la première graduation 4 est fixée de sorte que lors d'un déplacement angulaire de la pièce 2 mobile, le réglage de l'amplitude du déplacement impose, dans un premier temps, de déterminer la position de départ de la pièce 2 mobile puis, dans un second temps, de calculer la position de fin de course souhaitée pour ajuster le réglage de cette position de fin de course en fonction de l'amplitude de déplacement recherchée.

Selon l'invention, la surface 5 associée au support 1 qui porte la première graduation 4 réalise une seconde pièce 51 montée mobile en rotation par rapport au support 1, autour d'un axe de pivotement commun avec l'axe de pivotement de la pièce 2 mobile. Selon cette construction, la première graduation 4 comprend au moins une marque correspondant à une valeur de référence qui est ajustable à une marque de la seconde graduation 6 de la pièce 2 mobile en position immobile. Ainsi selon cette construction, la première graduation 4 est ajustable à la pièce 2 mobile, de sorte que lors d'un déplacement angulaire de la pièce 2 mobile, le réglage de l'amplitude du déplacement consiste, dans un premier temps, à positionner au moins une marque de la première graduation 4 de mesure correspondant à une valeur de référence en vis-à-vis d'une marque de la seconde graduation 6 de type vernier de la pièce 2 mobile. Cet ajustement est opéré par pivotement de la seconde pièce 51 montée mobile en rotation par rapport au support 1 tandis que la pièce 2 mobile qui porte la seconde graduation 6 de type vernier est maintenue immobile. Dans un second temps, la marque de la seconde graduation 6 de type vernier de la pièce 2 mobile est déplacée selon l'amplitude recherchée le long de la première graduation 4 de mesure jusqu'à une position de fin de course correspondant au déplacement angulaire recherché de la pièce 2 mobile.

Selon une spécificité de cette construction particulière de l'ensemble de l'invention, la surface 5 qui porte la première graduation 4 présente la forme d'un anneau circulaire 51 centrée sur l'axe de pivotement de la pièce 2 mobile qui porte la seconde graduation 6. Selon un exemple de mise en oeuvre de cette spécificité de construction, le bord intérieur de l'anneau circulaire 51 est positionnée à proximité et/ou en contact avec le bord périphérique de la face 3 circulaire de la pièce 2 mobile ; l'anneau circulaire 51 et la pièce 2 mobile qui porte la seconde graduation 6 étant concentrique et mobile autour d'un même axe de pivotement.

Selon une autre particularité de construction de l'ensemble de l'invention complémentaire avec les différentes particularités détaillées, au moins une pièce 2, 51 montée mobile en rotation par rapport au support 1 est associée à un mécanisme de freinage 7 de la rotation de la pièce 2, 51 mobile. Selon un exemple de construction, ce mécanisme de freinage 7 est réalisé par une pièce de contact 71 montée coulissante le long d'un guide 72 de déplacement et mise en pression sous l'action d'un moyen ressort 73 de sorte que la pièce de contact 71 appuie contre un bord, préférentiellement périphérique, de la pièce 2, 51 mobile à freiner. Ce mécanisme de freinage 7 associé à une pièce 2, 51 qui intervient, directement ou indirectement, dans le réglage manuel, permet de conserver une mobilité à la pièce 2, 51 mobile concernée, tout en limitant, voire empêchant, les déplacements angulaires parasite ou non-recherchés. Ce mécanisme de freinage 7 permet également de maintenir la pièce 2, 51 mobile concernée lorsque l'utilisateur ne la manipule pas.

Selon une autre particularité de construction de l'ensemble de l'invention, alternative ou complémentaire, au moins une pièce 2, 51 montée mobile en rotation par rapport au support 1 est associée à un mécanisme d'incrémentation.

Selon une particularité complémentaire de l'invention, la pièce 2 mobile qui porte la seconde graduation 6 de type vernier est réalisée par une vis, par exemple une vis qui participe à un serrage.

L'invention porte également sur un dispositif de coupe ou d'alésage selon la revendication 6 tel que le dispositif comprend au moins un ensemble selon l'invention.

Plus particulièrement, l'invention porte aussi sur une cartouche micrométrique selon la revendication 7 tel que la cartouche comprend au moins un ensemble selon l'invention.

De même, l'invention porte sur une barre d'alésage selon la revendication 8 tel que la barre comprend au moins un ensemble selon l'invention.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini par les revendications.

## Revendications

1. Ensemble arrangé pour être intégré dans un mécanisme de coupe et/ou d'alésage de précision pour son réglage manuel comprenant :
- un support (1) fixe,
- une pièce (2) ayant au moins une face (3) sensiblement circulaire et montée sur le support (1) fixe de sorte que la pièce (2) est montée mobile en rotation autour d'un axe sensiblement centré sur la face (3) circulaire,
**caractérisé en ce que** l'ensemble comprend également un dispositif de réglage de la position de la pièce (2) par rapport au support (1) comprenant au moins :
- une première graduation (4) sur une surface (5) associée au support (1) fixe et positionnée sur au moins une portion de la périphérie de la pièce (2) mobile, la première graduation (4) étant une graduation de mesure,
- une seconde graduation (6) positionnée sur la face (3) circulaire de la pièce (2) mobile, la seconde graduation (6) étant de type vernier,
et **en ce que** la surface (5) associée au support (1) qui porte la première graduation (4) réalise une seconde pièce (51) montée mobile en rotation par rapport au support (1), autour d'un axe de pivotement commun avec l'axe de pivotement de la pièce (2) mobile.

2. Ensemble selon la revendication 1, **caractérisé en ce que** la première graduation (4) comprend au moins une marque correspondant à une valeur de référence qui est ajustable à une marque de la seconde graduation (6) de la pièce (2) mobile en position immobile.

3. Ensemble selon une des revendications 1 ou 2, **caractérisé en ce que** la surface (5) qui porte la première graduation (4) présente la forme d'un anneau circulaire (51) centrée sur l'axe de pivotement de la pièce (2) mobile qui porte la seconde graduation (6).

4. Ensemble selon une des revendications précédentes, **caractérisé en ce que** au moins une pièce (2, 51) montée mobile en rotation par rapport au support (1) est associée à un mécanisme de freinage (7) de la rotation de la pièce (2, 51) mobile.

5. Ensemble selon une des revendications précédentes, **caractérisé en ce que** au moins une pièce (2, 51) montée mobile en rotation par rapport au support (1) est associée à un mécanisme d'incrémentation.

6. Dispositif de coupe ou d'alésage **caractérisé en ce que** le dispositif comprend au moins un ensemble selon une des revendications 1 à 5.

7. Cartouche micrométrique **caractérisée en ce que** la cartouche comprend au moins un ensemble selon une des revendications 1 à 5.

8. Barre d'alésage **caractérisée en ce que** la barre comprend au moins un ensemble selon une des revendications 1 à 5.

## Patentansprüche

1. Anordnung zum Integrieren in einem Präzisionsschneidmechanismus und/oder Präzisionsausbohrmechanismus für dessen manuelle Einstellung, wobei die Anordnung folgendes aufweist:
- einen festen Träger (1),
- ein Teil (2), das wenigstens eine im Wesentlichen kreisförmige Fläche (3) aufweist und an dem festen Träger (1) so angebracht ist, dass das Teil (2) um eine im Wesentlichen mittige Achse auf der kreisförmigen Fläche (3) drehbar angebracht ist,
**dadurch gekennzeichnet, dass** die Anordnung auch eine Vorrichtung zum Einstellen der Position des Teils (2) in Bezug auf den Träger (1) umfasst, die wenigstens folgendes aufweist:
- eine erste Skala (4) auf einer Fläche (5), die mit dem festen Träger (1) assoziiert ist und entlang wenigstens eines Teils des Umfangs des beweglichen Teils (2) positioniert ist, wobei die erste Skala (4) eine Messskala ist,
- eine zweite Skala (6), die auf der kreisförmigen Fläche (3) des beweglichen Teils (2) positioniert ist, wobei die zweite Skala (6) eine Vernier-Skala ist,
und dass die mit dem Träger (1) assoziierte Fläche (5), die die erste Skala (4) trägt, ein zweites Teil (51) bildet, das in Bezug auf den Träger (1) um eine mit der Schwenkachse des beweglichen Teils (2) gemeinsame Schwenkachse drehbar montiert ist.

2. Anordnung nach Anspruch 1, **dadurch gekennzeichnet, dass** die erste Skala (4) wenigstens eine Markierung umfasst, die einem Referenzwert entspricht und auf eine Markierung der zweiten Skala (6) des beweglichen Teils (2) in einer unbewegten Position einstellbar ist.

3. Anordnung nach einem der Ansprüche 1 oder 2, **dadurch gekennzeichnet, dass** die Fläche (5), die die erste Skala (4) trägt, die Form eines kreisförmigen Rings (51) aufweist, der auf der Schwenkachse des beweglichen Teils (2) zentriert ist, das die zweite Skala (6) trägt.

4. Anordnung nach einem der vorhergehenden Ansprüche, **dadurch gekennzeichnet, dass** wenigstens ein Teil (2, 51), das drehbar in Bezug auf den Träger (1) montiert ist, mit einem Bremsmechanismus (7) zum Abbremsen der Drehung des beweglichen Teils (2, 51) verbunden ist.

5. Anordnung nach einem der vorhergehenden Ansprüche, **dadurch gekennzeichnet, dass** wenigstens ein Teil (2, 51), das in Bezug auf den Träger (1) drehbar montiert ist, mit einem Antriebsmechanismus verknüpft ist.

6. Vorrichtung zum Schneiden oder Ausbohren, **dadurch gekennzeichnet, dass** die Vorrichtung wenigstens eine Anordnung nach einem der Ansprüche 1 bis 5 umfasst.

7. Mikrometereinsatz, **dadurch gekennzeichnet, dass** der Einsatz wenigstens eine Anordnung nach einem der Ansprüche 1 bis 5 umfasst.

8. Ausbohrstange, **dadurch gekennzeichnet, dass** die Stange wenigstens eine Anordnung nach einem der Ansprüche 1 bis 5 umfasst.

## Claims

1. Assembly arranged to be incorporated in a precision cutting and/or boring mechanism for the manual adjustment thereof comprising:
- a fixed support (1),
- a piece (2) having at least one substantially circular face (3) and mounted on the fixed support (1) such that the piece (2) is mounted to be movable in rotation about an axis substantially centred on the circular face (3),
**characterized in that** the assembly also comprises a device for adjusting the position of the piece (2) with respect to the support (1) comprising at least:
- a first graduation (4) on a surface (5) associated with the fixed support (1) and positioned on at least a portion of the periphery of the movable piece (2), the first graduation (4) being a measurement graduation,
- a second graduation (6) positioned on the circular face (3) of the movable piece (2), the second graduation (6) being of Vernier type,
and **in that** the surface (5) associated with the support (1) which bears the first graduation (4) produces a second piece (51) that is mounted to be movable in rotation with respect to the support (1), about a pivoting axis common to the pivoting axis of the movable piece (2).

2. Assembly according to Claim 1, **characterized in that** the first graduation (4) comprises at least one mark corresponding to a reference value which can be adjusted to a mark of the second graduation (6) of the movable piece (2) in an immobile position.

3. Assembly according to one of Claims 1 and 2, **characterized in that** the surface (5) which bears the first graduation (4) takes the form of a circular ring (51) centred on the pivoting axis of the movable piece (2) which bears the second graduation (6).

4. Assembly according to one of the preceding claims, **characterized in that** at least one piece (2, 51) that is mounted to be movable in rotation with respect to the support (1) is associated with a braking mechanism (7) for braking the rotation of the movable piece (2, 51).

5. Assembly according to one of the preceding claims, **characterized in that** at least one piece (2, 51) that is mounted to be movable in rotation with respect to the support (1) is associated with an incrementing mechanism.

6. Cutting or boring device, **characterized in that** the device comprises at least one assembly according to one of Claims 1 to 5.

7. Micrometric cartridge, **characterized in that** the cartridge comprises at least one assembly according to one of Claims 1 to 5.

8. Boring bar, **characterized in that** the bar comprises at least one assembly according to one of Claims 1 to 5.
